# DEMANDE DE BREVET EUROPEEN

(11) **EP 3 483 117 A2**
(43) Date de publication de la demande: **15.05.2019**
(21) Numéro de dépôt: 18213327.2
(22) Date de dépôt: 18.12.2018
(51) Int. Cl.: C01B 3/38

(54) **PROCEDE ET INSTALLATION DE PRODUCTION D'HYDROGENE PAR REFORMAGE AVEC UNE SECURITE ELECTRIQUE**

(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: De Cayeux, Olivier, 94503 CHAMPIGNY SUR MARNE (FR); Ryckelynck, Hervé, 92220 Bagneux (FR); de La Varga Villagra, Ignacio, 28021 MADRID (ES); Maire, Claude, 94503 CHAMPIGNY SUR MARNE (FR)
(74) Mandataire: Conan, Philippe Claude

(57) **Abrégé**

L'invention concerne un procédé de production d'hydrogène d'hydrogène, de monoxyde de carbone ou d'un mélange H₂/CO obtenu par reformage à la vapeur à partir d'un mélange d'hydrocarbures légers comprenant une étape de génération de gaz de synthèse par reformage de méthane à la vapeur via une unité de reformage, dans lequel au moins un équipement alimenté en électricité est essentiel au fonctionnement de l'unité de reformage, caractérisé en ce que en cas de perturbation de la fourniture d'électricité, chacun desdits équipements alimentés en électricité essentiels au fonctionnement de l'unité de reformage est alimenté en électricité instantanément, sans limitation de durée et sans interruption via un système dédié de sorte que ladite perturbation de la fourniture d'électricité ne provoque pas l'interruption de la production de gaz de synthèse et de la production du produit final obtenu à partir de celui-ci.

## Description

La présente invention concerne un procédé de production d'hydrogène, de monoxyde de carbone ou d'un mélange H₂/CO obtenu par reformage à la vapeur à partir d'un mélange d'hydrocarbures légers, avec au moins génération de gaz de synthèse par reformage de méthane à la vapeur via une unité de reformage et fourniture d'électricité aux équipements mettant en oeuvre le procédé à partir d'une source d'électricité principale et dans lequel au moins un équipement alimenté en électricité est essentiel au fonctionnement de l'unité de reformage.

Les utilisateurs d'hydrogène, de monoxyde de carbone ou de gaz de synthèse (mélange de H₂ et de CO principalement) ont le plus souvent besoin d'une grande fiabilité dans la fourniture de ces gaz.

Ces gaz sont le plus souvent obtenus par reformage de gaz naturel ou d'autres sources d'hydrocarbures légers, or ce procédé de production de gaz de synthèse (aussi appelé syngas), et donc la production d'H₂ et CO qui en découle, est sensible aux perturbations d'alimentation venant du réseau de distribution électrique - qui constitue le plus souvent la source d'électricité principale -, baisses de tension, coupures et autres perturbations; cette sensibilité est due à la présence de différents équipements électriques qui sont essentiels au fonctionnement de l'unité de reformage dans sa globalité, typiquement : les ventilateurs d'air de combustion, les ventilateurs d'extraction des gaz de combustion, les pompes pour l'eau d'alimentation des chaudières, les compresseurs de charge et de fuel, etc. A titre d'exemple, des chutes/baisses de tension peuvent provoquer le déclenchement d'un ventilateur, ou le ralentir conduisant à une pression hors limite dans le four ; elles peuvent aussi conduire à un niveau hors limite dans le ballon de vapeur par défaillance des pompes. Des températures de syngas hors limites en amont du PSA ne compromettent pas le reformage, par contre, elles vont compromettre la fiabilité du PSA et interrompre la fourniture au client etc.

Dans la plupart des cas, dès que l'on détecte que des paramètres sont hors limites, le procédé de reformage doit être déclenché pour des raisons de sécurité, provoquant une interruption de la fourniture de produit à l'utilisateur final (H₂, CO, syngas, vapeur produite), et ceci jusqu'au redémarrage effectif de l'installation.

L'interruption de la fourniture des produits issus du reformage provoque souvent d'autres déclenchements ou perturbations dans le procédé du client en aval, conduisant à des pertes matérielles significatives par mise à la torche, par évacuation en tant qu'effluents - quand cette dernière opération est possible sans danger. En raison de la complexité des procédés faisant appel à ces produits, des interruptions courtes de la fourniture (heures, minutes, voire quelques secondes) peuvent conduire à des déclenchements et à des perturbations pouvant se prolonger pendant des heures, ou même des jours avant que la situation soit de nouveau sous contrôle et revenue à la normalité. En résumé, que les défaillances électriques affectant le procédé de reformage soient brèves ou plus longues, elles peuvent avoir un impact significatif sur l'unité de reformage et sur le procédé de l'utilisateur (unités aval).

Il y a donc un besoin d'amélioration de la fiabilité des installations de production de gaz de synthèse et de produits issus de sa purification (hydrogène et monoxyde de carbone essentiellement, mais aussi vapeur ou autres co-produits), ou plus exactement d'amélioration de la fiabilité de la fourniture de ces produits au client final. Cette fiabilité de la fourniture du produit au client final est tout particulièrement dépendante de la fiabilité de la fourniture d'énergie électrique à l'unité de reformage.

Une autre contrainte qui pèse sur l'installation de production est liée à la fourniture d'énergie aux circuits de contrôle critiques (circuits et équipements qui permettent la mise en sécurité de l'usine en cas de coupure électrique). Cette fourniture d'énergie est en général sécurisée par un générateur de secours dédié mis en route en cas de coupure de la source principale.

D'autres contraintes encore, imposent aux installations dites de consommation raccordées aux réseaux de distribution électrique de respecter des obligations vis-à-vis de ces fournisseurs d'électricité, ces obligations sont en particulier :
- la protection du réseau de distribution vis à vis des perturbations générées par le fonctionnement des équipements - récepteurs électriques - de l'installation; cette protection doit être assurée en permanence. Parmi ces perturbations figure la génération de courants harmoniques que l'utilisateur du réseau doit limiter par la mise en oeuvre de filtres anti-harmoniques généralement composés de diviseurs inductifs dits parallèles ;
- la correction du facteur de puissance de l'installation affecté par la consommation d'énergie réactive, en général assurée par l'ajout de bancs de condensateurs.

Si la nécessité de pallier les perturbations électriques affectant des éléments essentiels des installations industrielles est connue, les diverses solutions existantes visent essentiellement à faire face aux perturbations de courte durée et/ou à permettre la mise en sécurité des installations en cas de défaillances plus longues, ce qui ne permet pas d'assurer la fiabilité de fourniture des produits de reformage sur une durée indéterminée.

Il y a donc un besoin d'amélioration de la fiabilité de la fourniture des produits issus du reformage de méthane au client final. Cette fiabilité de la fourniture de produit au client final est tout particulièrement dépendante de la fiabilité de la fourniture d'énergie électrique à l'unité de reformage.

Il y a aussi un besoin de simplification de l'architecture de la distribution électrique de l'installation dont on attend qu'elle réponde au respect des exigences imposées par le fournisseur d'électricité tout comme à la sécurisation de consommateurs et de circuits de contrôles critiques. Outre l'intégration d'un générateur de secours pour les circuits de contrôle critique, de filtres anti-harmoniques et de bancs de condensateurs pour prendre en compte ces contraintes, il n'est pas rare qu'une seconde source d'alimentation électrique vienne renforcer l'architecture à la demande du client final qui souhaite sécuriser au mieux la production.

La solution de l'invention vise à répondre à ces trois besoins :
- assurer la sécurisation de l'approvisionnement en électricité de l'unité de reformage afin d'assurer son fonctionnement quel que soit l'état du réseau électrique de sorte à pouvoir produire sans interruption et sans limitation de durée du gaz de synthèse pour alimenter les procédés aval en fonction des exigences,
- et en utilisant les mêmes moyens qui se substituent alors en totalité ou en partie aux moyens existants:
   ▪ assurer la conformité de l'installation vis-à-vis du réseau électrique, c'est-à-dire limiter la génération de courants harmoniques vers le réseau et assurer la correction du facteur de puissance,
   ▪ assurer la fourniture d'énergie aux circuits de contrôle critiques (i.e. les charges qui permettent la mise en sécurité de l'usine en cas de coupure électrique).

Selon l'invention, on installe au niveau de l'unité de reformage un système générateur d'électricité apte à se substituer au réseau défaillant; la fonction de ce système est de prendre en charge sans interruption - c'est à dire instantanément et durablement - tout ou partie de la consommation électrique de l'installation nécessaire au procédé de reformage en cas de défaillance ou d'interruption de la source d'alimentation électrique principale, quelle que soit la durée de la panne, en général jusqu'à la remise en marche normale de l'installation.

Pour cela, le système générateur d'électricité sans interruption réunira un ensemble d'éléments coopérant entre eux, comprenant une machine synchrone réversible, un accumulateur d'énergie cinétique (un volant d'inertie), un embrayage électromagnétique et un moteur à combustion.

En opération normale, c'est à dire lorsque le réseau électrique assure normalement la fourniture d'électricité, le moteur à combustion est à l'arrêt, l'accumulateur d'énergie cinétique est entraîné par la machine synchrone, celle-ci, dans cette configuration, est en rotation mais n'est pas accouplée au moteur à combustion. Les équipements électriques du procédé de reformage sont alimentés par le réseau, source d'électricité normale

En cas de perturbation du réseau électrique (perte de tension, chute de tension, décalage de fréquence, etc.), la fourniture de l'électricité nécessaire aux équipements électriques secourus par le système générateur d'électricité sans interruption est immédiatement assurée par la machine synchrone réversible entraînée par l'accumulateur d'énergie cinétique. Simultanément, le moteur à combustion démarre et lorsque la fréquence de rotation nominale est atteinte, l'embrayage se ferme pour permettre au moteur à combustion de prendre le relais de l'accumulateur d'énergie cinétique et d'entraîner la machine synchrone . Tout au long de ces différentes étapes, l'alimentation électrique des équipements secourus est assurée sans aucune interruption .

Ainsi donc, l'invention propose de secourir les équipements essentiels du reformage par un système générateur d'électricité sans interruption tel que décrit ci-avant ce qui permet d'améliorer les performances du procédé en terme de fiabilisation de la production; le système installé pourra aussi remplacer tout ou partie des organes prenant en charge les contraintes imposées à l'installation raccordée au réseau de distribution électrique ainsi que l'alimentation électrique des circuits de contrôle.

Pour cela, l'objet de l'invention est un procédé de production d'hydrogène, de monoxyde de carbone ou de mélange hydrogène /monoxyde de carbone obtenu par reformage à la vapeur à partir d'un mélange d'hydrocarbures légers avec au moins génération de gaz de synthèse par reformage de méthane à la vapeur via une unité de reformage et fourniture d'électricité aux équipements mettant en oeuvre le procédé à partir d'une source d'électricité principale et dans lequel au moins un équipement alimenté en électricité est essentiel au fonctionnement de l'unité de reformage, caractérisé en ce que en cas de perturbation de la fourniture d'électricité, chacun desdits équipements alimentés en électricité essentiels au fonctionnement de l'unité de reformage soit secouru instantanément, sans limitation de durée et sans interruption, via un système dédié de sorte que ladite perturbation de la fourniture électrique ne provoque pas d'interruption de la production de gaz de synthèse conduisant à celle de la production du produit final obtenu à partir de celui-ci.

Le procédé de l'invention peut présenter une ou plusieurs des variantes suivantes :
La source principale est un réseau de distribution électrique
- La source d'électricité principale est un réseau de distribution électrique.
- Le système dédié est un système générateur d'électricité sans interruption du type comprenant une machine synchrone réversible, un accumulateur d'énergie cinétique, un embrayage électromagnétique et un moteur à combustion;
- les équipements alimentés électriquement essentiels comprennent tout ou partie des équipements suivants : le(s) ventilateur(s) d'air pour la combustion, le(s) ventilateurs d'extraction des gaz de combustion, la/les pompe(s) pour l'eau d'alimentation des chaudières; la limitation de la sauvegarde aux équipements les plus critiques permet de limiter la taille du système générateur d'électricité sans interruption tout en assurant un retour au fonctionnement normal très rapide de l'installation lors du retour de la source électrique principale puisque les équipements constituant le coeur du procédé (four de reformage et système vapeur) sont restés en opération;
- on pourra décider en fonction de la criticité de la fourniture de produit au client de dimensionner le système générateur d'électricité sans interruption de sorte à sécuriser totalement ou en partie la fourniture des produits; on ajoute alors aux équipements alimentés électriquement essentiels que le système dédié doit alimenter en cas de perturbation électrique des équipements non essentiels pour le reformage en tant que tel, mais qui le sont pour le procédé aval et donc la production finale, comme les pompes des condensats, les compresseurs de produit ainsi que les autres équipements non essentiels pour le reformage en tant que tel, mais qui le sont pour le procédé aval et donc la production finale;
- tout ou partie des fonctions suivantes: fourniture des circuits de contrôle, réduction des courants harmoniques, correction des facteurs de puissance sont assurées au moins partiellement par ledit système;
- au moins une partie des hydrocarbures constituant le mélange d'hydrocarbures légers utilisé pour la production de gaz de synthèse étant appropriée pour cet usage, elle est utilisée en tant que combustible pour le moteur à combustion du générateur sans interruption.

Selon un autre aspect de l'invention, celle-ci concerne une installation pour la production de gaz de synthèse à partir d'un mélange d'hydrocarbures légers comprenant une unité de reformage de méthane à la vapeur avec des équipements alimentés électriquement à partir d'une source d'électricité principale, essentiels au fonctionnement de l'unité de reformage, caractérisée en ce qu'elle comporte un générateur d'électricité du type sans interruption fournissant à l'installation, lorsque la fourniture d'électricité par le réseau est défaillante, de façon instantanée et sans limitation de durée, l'électricité nécessaire au fonctionnement desdits équipements alimentés électriquement essentiels à l'unité de reformage de sorte à assurer sans interruption une production de gaz de synthèse par l'unité de reformage.

L'installation selon l'invention peut présenter une ou plusieurs des variantes suivantes :
- le générateur d'électricité additionnel du type sans interruption est un générateur d'électricité comprenant au moins un moteur-générateur électrique réversible, un accumulateur, un embrayage et un moteur à combustion;
- les équipements alimentés électriquement essentiels comprennent tout ou partie des équipements suivants : les ventilateurs d'air pour la combustion, les ventilateurs d'extraction des gaz de combustion, les pompes pour l'eau d'alimentation des chaudières;
- les équipements alimentés en cas de perturbation électrique comprennent aussi les pompes des condensats, les compresseurs de produit ainsi les autres équipements non essentiels pour le reformage en tant que tel, mais qui le sont pour le procédé aval et donc la production finale;

- le générateur est installé de sorte à, en outre, assurer la fonction de et se substituer à, tout ou partie des organes électriques suivants : le générateur diésel assurant le secours des circuits de contrôle, les filtres anti-harmoniques pour la réduction des courants harmoniques, et/ou les batteries de condensateurs pour la correction du facteur de puissance;
- le mélange d'hydrocarbures utilisé pour la production de gaz de synthèse est apte à fournir une source de combustible appropriée pour le moteur à combustion du générateur sans interruption.

L'invention sera mieux comprise à l'aide des figures décrites ci-après , dans lesquelles:
[Fig.1] représente un schéma simplifié de principe d'alimentation électrique classique d'une installation de production d'hydrogène comprenant une unité de reformage pour la génération de gaz de synthèse.
[FIG. 2] représente un schéma simplifié de principe d'une alimentation électrique du type de celle de l'installation de la figure 1, modifiée conformément à l'invention.

Ces schémas sont des schémas de principe seulement, en tant que tels, ils font notamment abstraction des niveaux de tension (basse ou haute); les architectures réelles peuvent être sensiblement différentes, en particulier les charges critiques et la ligne qui les alimente peuvent être en sous distribution de 6 tout en étant secourus par le générateur 11 qui leur est dédié.

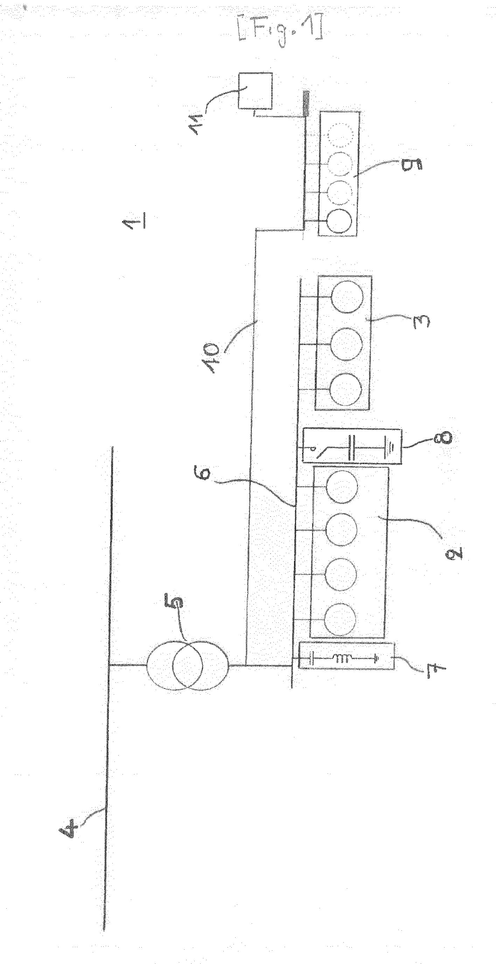

Selon [FIG. 1] l'installation **1** comprend des équipements alimentés électriquement, regroupés schématiquement en deux ensembles **2** et **3**: les éléments essentiels au fonctionnement de l'unité de reformage forment l'ensemble **2**, les autres éléments alimentés électriquement de l'installation forment l'ensemble **3**. En fonctionnement normal, ces deux ensembles d'éléments sont alimentés électriquement à partir du réseau électrique amont **4** qui après passage éventuel par un transformateur de tension **5** alimente via le tableau de distribution **6** les ensembles **2** et **3** ainsi que le système **7** de limitation des courants harmoniques et le système **8** de correction du facteur de puissance; les circuits de contrôle critiques regroupés schématiquement dans l'ensemble **9** sont alimentés, toujours à partir du réseau **4,** via le transformateur **5** et la ligne **10**, Sur ce schéma classique, un générateur de secours **11** est disponible pour secourir l'ensemble **9** des charges de contrôle en cas de défaillance de la fourniture d'électricité par le réseau.

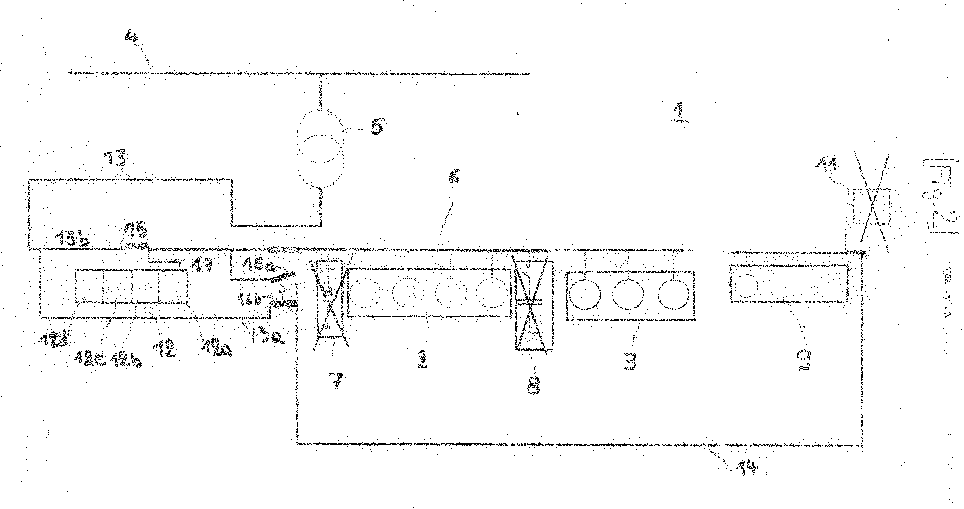

Selon [FIG. 2] qui représente schématiquement une alimentation électrique du type de celle la figure 1 modifiée conformément à l'invention, les éléments déjà identifiés gardent les mêmes numéros de référence, l'installation **1** est équipée d'un générateur **12** d'électricité sans interruption conformément à l'invention.

Selon la configuration présentée sur cette figure, le générateur **12** remplit les fonctions suivantes :
- assurer via la ligne **13**, raccordée à la sortie du générateur **12,** l'alimentation en énergie électrique sans interruption et sans limitation de durée du tableau de distribution **6** des équipements essentiels de l'ensemble **2**;assurer via **13** et **6** la limitation des courants harmoniques en remplacement total ou partiel de l'équipement **7** de la solution classique;
- assurer via **13** et **6** la correction du facteur de puissance en remplacement total ou partiel de l'équipement **8** de la solution classique; à noter que l'importance de la contribution du générateur **12** au remplacement des équipements **7** et **8** va varier en fonction de son dimensionnement;
- assurer l'alimentation des circuits de contrôle critiques **9** via l'ensemble **(13, 13a, 13b, 16a, 16b**) ainsi que la ligne **14** qui les relie au générateur **12** ;
- assurer l'alimentation des équipements électriques - non essentiels - de l'ensemble **3**. Comme indiqué ci-avant dans la description, le choix de cette option implique de prévoir un générateur d'électricité de plus grande taille, secourir électriquement les équipements non essentiels au reformage est une possibilité, mais n'est pas obligatoire dans le contexte d'une protection du reformage.

Pour être apte à remplir ces fonctions, le générateur **12** réunit un ensemble d'éléments coopérant entre eux, comprenant une machine synchrone réversible **12a**, un accumulateur d'énergie cinétique (un volant d'inertie) **12b**, un embrayage électromagnétique **12c** et un moteur à combustion **12d** l'ensemble des éléments coopérant entre eux.

En mode normal, c'est-à-dire lorsque le réseau électrique amont **4** (source d'électricité principale) alimente sans défaillance l'installation, l'alimentation électrique de l'installation s'opère de la manière décrite ci-après.
- Les équipements des ensembles **2** et **3** sont alimentés par le réseau électrique **4** via le transformateur **5**, via la ligne **13**, la ligne **13a**, la réactance **15** et le tableau de distribution **6**.
- La solution de l'invention permet de supprimer les équipements **7** et 8 présents sur le schéma de la figure 1, leur fonction est ici remplie par le générateur **12** dont la machine synchrone réversible lorsqu'elle tourne à vide - c'est à dire hors défaillance du réseau - améliore le facteur de puissance en fournissant de l'énergie réactive. La réactance **15** interposée entre le réseau d'alimentation et l'installation contribue à la correction du facteur de puissance (entretenu proche de 1). Dans les cas où la limite du dimensionnement de la machine synchrone par rapport à la consommation totale de l'installation ne permet pas la suppression totale des bancs de condensateurs classiques **8**, ils ne seront supprimés que pour partie.
- La solution inclut des diviseurs inductifs parallèles qui filtrent les harmoniques de courant générés par certains équipements de l'installation, ainsi que des diviseurs inductifs série qui filtrent les harmoniques de tension du réseau le cas échéant (ces diviseurs ne sont pas représentés sur la figure) : les filtres anti-harmoniques classiques **7** peuvent ainsi être supprimés.
- Le moteur à combustion **12d** est à l'arrêt et l'accumulateur d'énergie cinétique **12b** est entraîné par la machine synchrone **12a**.
- Les circuits critiques **9** sont alimentées à partir du réseau **4** via la ligne **13,** la ligne **13b** et la ligne **14**, les deux lignes étant reliées par l'interrupteur **16b** en position fermée - tandis que l'interrupteur **16a** est ouvert.

En cas de perturbation du réseau électrique (perte de tension, chute de tension, décalage de fréquence, etc.), la fourniture de l'électricité nécessaire aux équipements électriques secourus par le système générateur d'électricité (impérativement l'ensemble **2**, et dans le contexte de la figure l'ensemble **3**) est immédiatement assurée via la ligne **17** par la machine synchrone réversible **12a** entraînée par l'accumulateur d'énergie cinétique **12b** ; simultanément, le moteur à combustion **12d** démarre et lorsque la fréquence de rotation nominale est atteinte, l'embrayage **12c** se ferme pour permettre la prise en charge de l'alimentation électrique des éléments secourus par le moteur à combustion ; l'alimentation électrique des équipements secourus est ainsi assurée sans aucune interruption .

L'ensemble interrupteur **16a-16b** bascule (**16b** est alors ouvert, **16a** est alors fermé) pour alimenter les circuits critiques **9** via le seul interrupteur **16a** et la ligne **14**. Typiquement, les circuits critiques seront alimentés pendant un temps de l'ordre de 12 secondes après que le réseau électrique ait fait défaut; cela correspond au temps nécessaire pour démarrer le moteur à combustion 12d, vérifier la stabilité de la fourniture d'électricité par le système 12, avant de fermer 12a.

Les éléments auxquels le générateur **12** s'est substitué, c'est à dire : le système **7** de limitation des courants harmoniques, le système **8** de correction du facteur de puissance et le groupe diesel **11** de secours des circuits de contrôle critiques restent représentés sur le schéma de la figure, mais sont barrés d'une croix pour représenter leur suppression.

En résumé, intégrer un système générateur d'électricité sans interruption à une unité de génération de gaz de synthèse en vue de produire de l'hydrogène permet de sécuriser le reformage qui est le coeur critique du procédé augmentant ainsi la fiabilité de la production, mais aussi remplace avantageusement: le générateur diesel de l'installation classique pour assurer les circuits de contrôle critiques, les batteries de condensateurs pour corriger le facteur de puissance et les filtres anti-harmoniques.

Lorsque les installations intégrant ce système générateur sans interruption disposent dans le cadre de leurs procédés de charges d'hydrocarbures appropriées (combustibles liquides de type LPG, naphta ou certains résiduaires de raffinerie), on pourra utiliser ces hydrocarbures comme combustible pour son moteur à combustion.

La solution de l'invention, qui intègre un système générateur d'électricité sans interruption en tant qu'alimentation électrique pour secourir l'unité de reformage d'une installation de production d'hydrogène est donc particulièrement intéressante. Parmi les avantages générés par cette solution, on peut citer en complément de ceux listés précédemment:
- meilleure fiabilité et disponibilité : en fonctionnement standard, des incidents de fourniture d'électricité peuvent se produire une à plusieurs fois par an selon la qualité et la fiabilité du réseau, grâce à la solution de l'invention, le procédé de reformage ne sera plus affecté par les déclenchements que les coupures de courant provoquaient;
- élimination du besoin de redondance: pour fiabiliser la fourniture d'énergie, l'installation est de façon classique - sur demande du client notamment - munie d'un double système d'alimentation électrique, l'invention permet de s'en affranchir;
- arbitrage des alimentations électriques : puisque le basculement entre les sources d'énergie électrique (source réseau principale et générateur sans interruption) peut être déclenché à tout moment, manuellement et en douceur, l'arrangement décrit peut être utilisé afin d'arbitrer les alimentations électriques, à concurrence des capacités de ce dernier à fournir suffisamment d'énergie électrique pour satisfaire l'ensemble des besoins;
- réduction de l'autonomie des batteries des UPS grâce au générateur (utilisable sans limitation de durée);
- maintenance du réseau électrique transparente: le reformage peut se poursuivre alors même que la maintenance du système réseau (ligne, arrivées électriques etc) est réalisée; le besoin de lignes, transformateurs, interrupteurs redondants disparaît ainsi;
- en complément des fonctions de filtration d'harmoniques et de correction du facteur de puissance, la solution inclut également - de par sa conception - une fonction de stabilisation de la tension d'alimentation de l'installation à plus ou moins 1%;
- lorsque l'administration ou les sociétés en charge du réseau électrique font bénéficier leurs clients de tarifs préférentiels ou d'incitation financière à stopper ou réduire leur consommation électrique à certains moments de forte consommation sur le réseau, l'installation munie de ce système générateur sans interruption pourra cesser de consommer de l'électricité en provenance du réseau et, sous réserve d'un dimensionnement adéquat, continuer à fournir son client car la source principale sera remplacée par le système générateur sans interruption.

## Revendications

1. Procédé de production d'hydrogène, de monoxyde de carbone ou de mélange hydrogène/monoxyde de carbone obtenu par reformage à la vapeur à partir d'un mélange d'hydrocarbures légers comprenant une étape de génération de gaz de synthèse par reformage de méthane à la vapeur via une unité de reformage et fourniture d'électricité aux équipements mettant en oeuvre le procédé à partir d'une source d'électricité principale et dans lequel au moins un équipement alimenté en électricité est essentiel au fonctionnement de l'unité de reformage, **caractérisé en ce que** en cas de perturbation de la fourniture d'électricité, chacun desdits équipements alimentés en électricité essentiels au fonctionnement de l'unité de reformage est alimenté en électricité instantanément, sans limitation de durée et sans interruption via un système dédié de sorte que ladite perturbation de la fourniture d'électricité ne provoque pas l'interruption de la production de gaz de synthèse et de la production du produit final obtenu à partir de celui-ci.

2. Procédé selon la revendication 1 **caractérisé en ce que** la source d'électricité principale est un réseau de distribution électrique.

3. Procédé selon la revendication 1 ou la revendication 2 **caractérisé en ce que** le système dédié est un système générateur d'électricité sans interruption du type comprenant une machine synchrone réversible, un accumulateur d'énergie cinétique, un embrayage électromagnétique et un moteur à combustion.

4. Procédé selon la revendication l'une des revendications 1 à 3 **caractérisé en ce que** les équipements électriques les plus critiques comprennent tout ou partie des équipements suivants : ventilateur(s) d'air pour la combustion, ventilateur(s) d'extraction des gaz de combustion, pompe(s) pour l'eau d'alimentation des chaudières.

5. Procédé selon la revendication 4 **caractérisé en ce que** le système dédié alimente aussi en cas de perturbation électrique, les pompes des condensats, les compresseurs de produit ainsi les autres équipements non essentiels pour le reformage en tant que tel, mais qui le sont pour le procédé aval et donc la production finale.

6. Procédé selon l'une des revendications 1 à 5 **caractérisé en ce que** tout ou partie des fonctions suivantes, fourniture des circuits de contrôle, réduction des courants harmoniques, compensation du facteur de puissance sont assurées par ledit système.

7. Procédé selon l'une des revendications précédentes **caractérisé en ce que** au moins une partie des hydrocarbures constituant le mélange d'hydrocarbures léger utilisé pour la production de gaz de synthèse étant appropriée pour cet usage, elle est utilisée en tant que combustible pour le moteur à combustion du générateur sans interruption.

8. Installation pour la production de gaz de synthèse à partir d'un mélange d'hydrocarbures légers comprenant une unité de reformage de méthane à la vapeur avec des équipements alimentés électriquement à partir d'une source d'électricité principale, essentiels pour le fonctionnement de l'unité de reformage,**caractérisée en ce qu'**elle comporte un générateur d'électricité du type sans interruption fournissant à l'installation, lorsque la fourniture d'électricité par le réseau est défaillante, de façon instantanée et sans limitation de durée, l'électricité nécessaire au fonctionnement desdits équipements alimentés en électricité essentiels de sorte à assurer sans interruption une production de gaz de synthèse par l'unité de reformage.

9. Installation selon la revendication 8 **caractérisée en ce que** la source principale d'électricité est un réseau de distribution électrique.

10. Installation selon la revendication 8 ou la revendication 9 **caractérisée en ce que** le générateur d'électricité du type sans interruption est un générateur d'électricité comprenant au moins une machine synchrone réversible, un accumulateur d'énergie cinétique, un embrayage électromagnétique et un moteur à combustion.

11. Installation selon l'une des revendications 8 à 10 **caractérisée en ce que** les équipements alimentés électriquement essentiels comprennent tout ou partie des équipements suivants : le(s) ventilateur(s) d'air pour la combustion, le(s) ventilateur(s) d'extraction des gaz de combustion, les pompes pour l'eau d'alimentation des chaudières, la pompe des condensats.

12. Installation selon l'une des revendications 8 à 11 **caractérisée en ce que** le système dédié alimente aussi en cas de perturbation électrique, les pompes des condensats, les compresseurs de produit ainsi les autres équipements non essentiels pour le reformage en tant que tel, mais qui le sont pour le procédé aval et donc la production finale.

13. Installation selon l'une des revendications 8 à 12 **caractérisée en ce que** ledit générateur est installé de sorte à, en outre, assurer la fonction de et se substituer à, tout ou partie des organes de sécurité électriques suivants : le générateur diésel assurant les circuits de contrôle, les filtres anti-harmoniques pour la réduction des courants harmoniques, et/ou les batteries de condensateurs pour la compensation du facteur de puissance.

14. Installation selon l'une des revendications 8 à 13 **caractérisée en ce que** le mélange d'hydrocarbures utilisé pour la production de gaz de synthèse est apte à fournir une source de combustible appropriée pour le moteur à combustion du générateur sans interruption.
